# EUROPÄISCHE PATENTSCHRIFT

(11) **EP 0 820 611 B1**
(45) Veröffentlichungstag und Bekanntmachung des Hinweises auf die Patenterteilung: **04.10.2000**
(21) Anmeldenummer: 97900926.3
(22) Anmeldetag: 03.02.1997
(51) Int. Cl.: G05D 9/02, F24F 6/04

(54) **PNEUMATISCHE (UNTERDRUCK) NIVEAUREGULIERUNG VON FLÜSSIGKEITEN**
PNEUMATIC (UNDERPRESSURE) LIQUID LEVEL REGULATION
REGULATION (DEPRESSION) PNEUMATIQUE D'UN NIVEAU FLUIDIQUE

(30) Priorität: 09.02.1996 CH 33196
(43) Veröffentlichungstag der Anmeldung: 28.01.1998
(73) Patentinhaber: Kaiser, Alex, 8635 Oberdürnten (CH)
(72) Erfinder: Kaiser, Alex, 8635 Oberdürnten (CH)
(74) Vertreter: Werffeli, Heinz R., Dipl.-Ing.ETH.
(86) Internationale Anmeldenummer: CH9700034
(87) Internationale Veröffentlichungsnummer: WO9729412

(56) Entgegenhaltungen:
- WO-A-85/05703
- WO-A-90/15958
- DE-U- 9 409 274
- GB-A- 1 454 994
- US-A- 5 238 187

## Beschreibung

Die Erfindung betrifft einen Luftbefeuchter mit einem oberen Flüssigkeits-Speisebecken, einem in dieses hineinragenden saugfähigen Kapillarelement und einem am unteren Ende des letzteren angeordneten Flüssigkeits-Auffangbecken.

Ein Luftbefeuchter der eingangs genannten Art ist aus dem deutschen Gebrauchsmuster G 94 09 274 bekannt. Weiterhin beschreibt die Patentschrift US-A-5 238 187 einen solchen Luftbefeuchter mit einem geschlossenen Flüssigkeitsbehälter zur gesteuerten Abgabe von Flüssigkeit in das Flüssigkeits-Speisebecken. Der Flüssigkeitsbehälter hat an seiner Unterseite eine Flüssigkeitsaustrittsleitung, die sich in den Behälter bis unterhalb eines bestimmten Flüssigkeits-Minimalniveaus erstreckt, und eine Luftzufuhrleitung zur gesteuerten Zufuhr von Luft in das Innere des Flüssigkeitsbehälters in Abhängigkeit von einem minimalen und einem maximalen Speisebecken-Flüssigkeitsniveau. Diese bekannte Luftbefeuchter weisen jedoch den Nachteil auf, dass die Flüssigkeitszufuhr zum oberen Ende des saugfähigen Kapillarelementes, d.h. zum oberen Flüssigkeits-Speisebecken, nicht in Abhängigkeit von einer vollständigen Durchfeuchtung des letzteren bis an dessen unteres Ende gesteuert wird.

Aufgabe der vorliegenden Erfindung ist die Schaffung eines Luftbefeuchters der eingangs genannten Art, bei welchen die Flüssigkeitszufuhr zum oberen Flüssigkeits-Speisebecken in Abhängigkeit vom Benetzungsgrad des Kapillarelementes bis an dessen unteres Ende gesteuert wird.

Diese Aufgabe wird mittels eines Luftbefeuchters nach Anspruch 1 gelöst.

Eine zweckmässige Weiterausgestaltung des Luftbefeuchters nach Anspruch 1 ist Gegenstand vom abhängigen Anspruch 2.

Nachstehend wird die Erfindung anhand der Zeichnungen beispielsweise erläutert. Es zeigen:
Fig.1 schematisch in Frontansicht eine erste beispielsweise Ausführungsform eines erfindungsgemässen Luftbefeuchters;
Fig.2 schematisch in Frontansicht eine zweite beispielsweise Ausführungsform eines erfindungsgemässen Luftbefeuchters;
Fig.3a und 3b schematisch in Seiten- und Frontansicht eine Ausführungsform eines Luftbefeuchters nach Fig. 1; und
Fig. 4a und Fig. 4b im Querschnitt und im Grundriss vergrössertem Massstab ausschnittweise eine zweckmässige Weiterausgestaltung des erfindungsgemässen Luftbefeuchters.

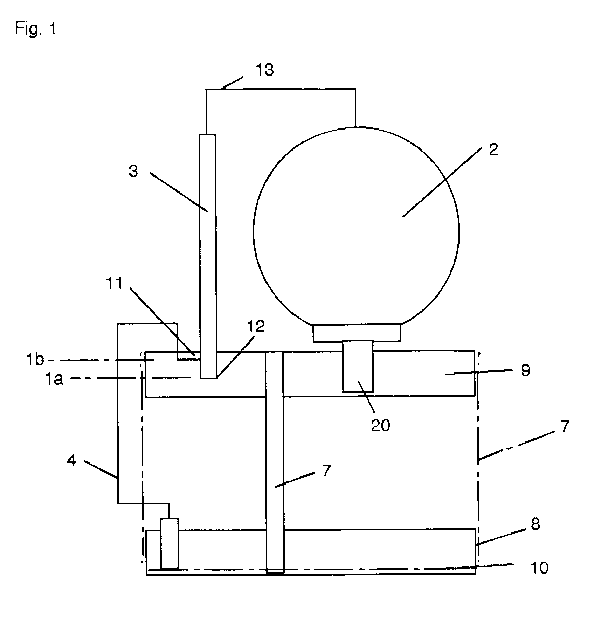

In den Figuren 1 bis 4 sind zueinander analoge Teile mit gleichen Bezugszeichen versehen, so dass sich eine mehrmalige Beschreibung der zueinander analogen Teile erübrigt.

Wie aus der Zeichnung ersichtlich, ist der Luftbefeuchter mit einem oberen Flüssigkeits-Speisebecken 9, einem in dieses hineinragenden saugfähigen Kapillarelement 7 (in Fig.1 nur symbolisch eingezeichnet) und einem am unteren Ende des letzteren angeordneten Flüssigkeits-Auffangbecken 8 versehen.

Ein in sich geschlossener Flüssigkeitsspeicherbehälter 2 ist gesteuerten Abgabe von Flüssigkeit aus demselben in das Flüssigkeits-Speisebecken 9 an seiner Unterseite mit einer in das letztere bis unterhalb ein bestimmtes Flüssigkeits-Minimalniveau la sich erstreckenden Flüssigkeitsaustrittsleitung 20 sowie an seiner Oberseite mit einer Luftzufuhrleitung 3, 13 zur gesteuerten Zufuhr von Luft in das Innere des Flüssigkeitsbehälters 2 in Abhängigkeit von einem minimalen und einem maximalen Speisebecken-Flüssigkeitsniveau 1a bzw. 1b versehen.

Diese Luftzufuhrleitung 3,13 erstreckt sich in das Flüssigkeits-Speisebecken 9 hinein und ist auf den beiden vorgenannten Flüssigkeitsniveaus 1a, 1b mit mindestens je einer Luftzufuhröffnung 12 resp. 11 versehen, wobei die obere Luftzufuhröffnung 11 über eine über das maximale Flüssigkeitsniveau 1b hinaus sich erstreckende, durch ein Schläuchlein gebildete Steuerleitung 4 mit dem Innern des Flüssigkeits-Auffangbecken 8 verbunden ist, derart, dass bei Vorhandensein eines bestimmten Minimalflüssigkeitsniveaus 10 im Auffangbecken 8 die Lufteintrittsöffnung am unteren Ende der Steuerleitung (Schlauch) 4 von der im Auffangbecken 8 sich befindenden Flüssigkeit überdeckt und damit deren Verbindung mit der Aussenatmosphäre vorübergehend so lange unterbrochen wird, bis das Flüssigkeitsniveau im Auffangbecken 8 wieder unterhalb diese Lufteintrittsöffnung der Steuerleitung 4 absinkt.

Zur Entnahme von Flüssigkeit aus dem Flüssigkeits-Speisebecken 9 erstreckt sich das saugfähige Kapillarelement 7 bis auf ein zwischen dem minimalen und dem maximalen Speisebecken-Flüssigkeitsniveau 1a bzw. 1b liegenden Niveau in das Speisebecken 9 hinein.

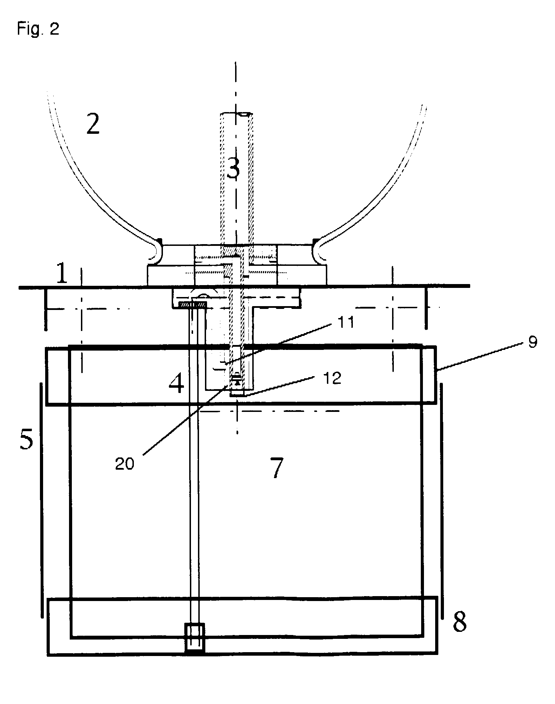

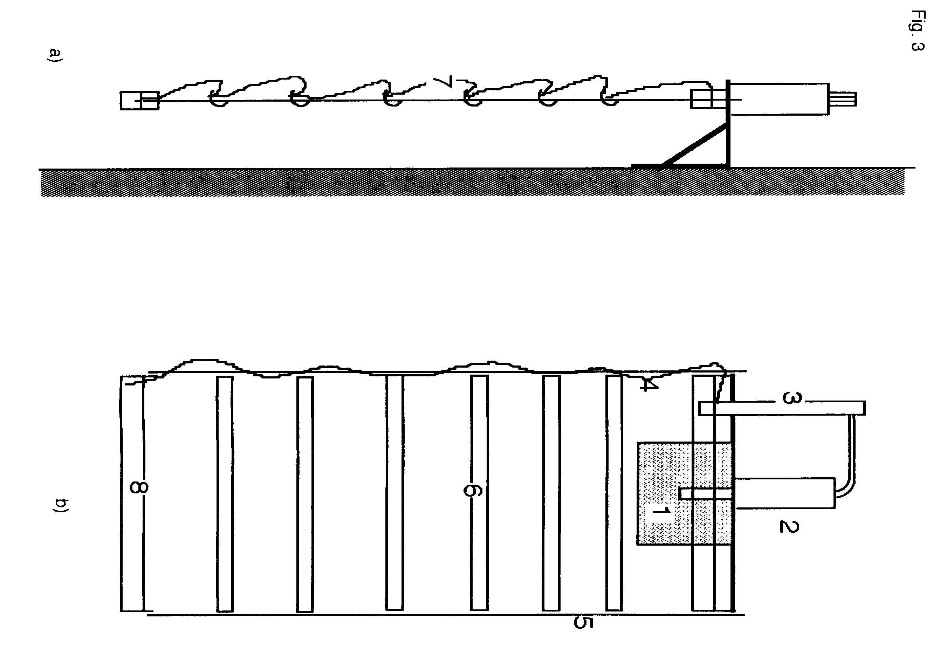

Die Luftzufuhrleitung 3 kann sich dabei extern (Fig. 1 und 3) oder intern (Fig. 2) vom Flüssigkeitsspeicherbehälter 2 bis in dessen oberem Innenteil erstrecken.

Die Funktionsweise dieses Luftbefeuchters ist dabei wie folgt:

Nach dem Einsetzen eines mit Wasser gefüllten Flüssigkeitsspeicherbehälters 2 mit dessen Flüssigkeitsaustrittsleitung 20 nach unten in das leere Flüssigkeits-Speisebecken 9 läuft, da beide Luftzufuhröffnungen 11 und 12 gegenüber der Aussenatmosphäre offen sind und damit ungehindert Luft in das Innere des Flüssigkeitsspeicherbehälters 2 gelangen kann, Wasser aus dem letzteren in das Innere des Flüssigkeits-Speisebeckens 9, bis der Wasserstand in letzterem das obere Flüssigkeitsniveau 1b erreicht, und dadurch beide Luftzufuhröffnungen 11 und 12 mittels der im Speisebecken 9 sich befindenden Flüssigkeit verschlossen werden, wodurch eine weitere Zufuhr von Flüssigkeit aus dem Flüssigkeitsspeicherbehälter 2 in das Speisebecken 9 unterbrochen wird.

Das als Kapillarelement 7 ausgebildete, in das Speisebecken 9 hineinragende Verdunsterelement saugt nun selbständig Wasser aus dem Speisebecken 9, wobei bei einem Absinken des Flüssigkeitsstandes unter das obere Maximalniveau 1b die Luftzufuhröffnung 11 wieder freigegeben wird, und erneut Flüssigkeit aus dem Flüssigkeitsspeicherbehälter 2 bis zum oberen Niveau 1b in das Speisebecken 9 nachfliesst.

Wenn das als Kapillarelement ausgebildete Verdunsterelement 7 bis an sein unteres Ende mit Verdunsterflüssigkeit durchtränkt ist, tropft überschüssige Flüssigkeit von diesem unteren Endteil in das Innere des Flüssigkeits-Auffangbeckens 8, bis das in demselben sich bildende Flüssigkeitsniveau 10 die Lufteintrittsöffnung am unteren Ende der Steuerleitung 4 überdeckt und damit gegen Luftzufuhr aus der Aussenatmosphäre verschliesst.

Dadurch gelangt keine weitere Luft mehr aus der Aussenatmosphäre in das Innere des Flüssigkeitsspeicherbehälters 2, so dass die Wasserzufuhr aus dem Letzteren in das Speisebecken 9 bis auf Weiteres unterbrochen wird.

Nach dem Absinken des Flüssigkeitsniveaus im Speisebecken 9 bis auf das untere Flüssigkeitsniveau 1a wird die weitere Zufuhr von Flüssigkeit aus dem Speisebecken 9 in den oberen Endteil des Kapillarelementes 7 gänzlich unterbrochen.

Sobald das untere Ende des als Verdunsterelement dienenden Kapillarelementes 7 abtrocknet und das Flüssigkeitsniveau 10 im Auffangbecken 8 unterhalb die am unteren Ende der Steuerleitung 4 sich befindende Lufteintrittsöffnung absinkt und diese dadurch freigibt, strömt erneut Luft aus der Aussenatmosphäre in das Innere des Flüssigkeitsspeicherbehälters 2, und ermöglicht ein Nachfliessen von Flüssigkeit aus dem letzteren in das Speisebecken 9 bis zum oberen Maximalniveau 1b.

Danach läuft der ganze Funktionszyklus erneut wie vorangehend beschrieben ab.

Das untere Minimalniveau 1a im Speisebecken 9 wird bei verschlossener Luftzutrittsöffnung 11 mittels der im Auffangbecken 8 vorhandenen Flüssigkeit dadurch aufrechterhalten, dass bei einem Absinken des in diesem Becken 9 existierenden Flüssigkeitsstandes unterhalb das untere Minimalniveau 1a die Luftzufuhröffnung 12 freigegeben wird, so dass Luft über die Letztere in das Innere des Flüssigkeitsspeicherbehälters 2 und damit Flüssigkeit aus letzterem in das Speisebecken 9 ausströmen kann bis die in letzterem vorhandene Flüssigkeit die Luftzufuhröffnung 12 erneut überdeckt und damit gegen die Aussenatmosphäre verschliesst.

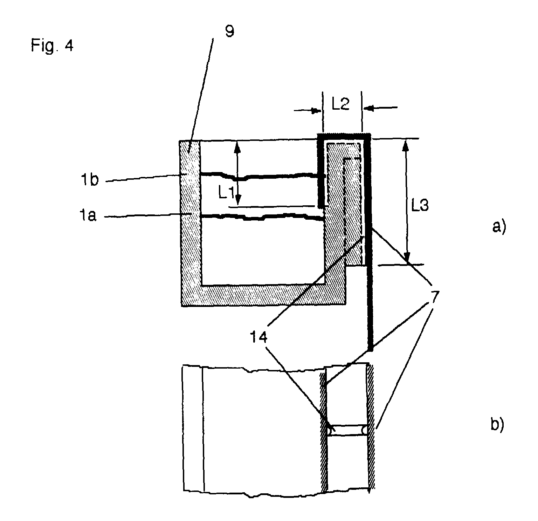

Um das Ansprechverhalten des Luftbefeuchters bei Flüssigkeitsbedarf im Verdunsterelement 7 zu verbessern, ist es, wie aus den Figuren 4a und 4b ersichtlich, möglich, das saugfähige Kapillarelement 7 auf seinem über den oberen Beckenrand des Speisebeckens 9 hinweg sich erstreckenden Abschnitt L1-L2-L3 zur Bildung einer Flüssigkeits-Pumpnut 14 mindestens eine vom Innern des Speisebeckens 9 über den oberen Beckenrand bis auf die Aussenseite dieses Beckens 9 erstreckende Nut 14 überdeckt, wobei die vertikale Länge L1 des im Beckeninnern sich erstreckenden, vom feuchten und dadurch abdichtend aufliegenden Kapillarelement 7 überdeckten Nutabschnittes geringer ist als die vertikale Länge L2 des auf der Beckenaussenseite sich erstreckenden, vom feuchten und damit auch dort abdichtend aufliegenden Kapillarelement 7 überdeckten Nutabschnitt, so dass bei einer vollständigen Füllung der derart überdeckten und dadurch ein Röhrchen bildenden Nut 14 mit aus dem Kapillarelement 7 stammender Flüssigkeit eine Pumpwirkung entsteht und Flüssigkeit aus dem Becken 9 auf die Aussenseite desselben zusätzlich in das Verdunsterelement 7 überströmt.

## Patentansprüche

1. Luftbefeuchter mit einem oberen Flüssigkeits-Speisebecken (9), einem in dieses hineinragenden saugfähigen Kapillarelement (7), einem am unteren Ende des letzteren angeordneten Flüssigkeits-Auffangbecken (8) und einem in sich geschlossenen Flüssigkeitsbehälter (2), welcher zur gesteuerten Abgabe von Flüssigkeit in das Flüssigkeits-Speisebecken (9) an seiner Unterseite mit einer in das letztere bis unterhalb ein bestimmtes Flüssigkeits-Minimalniveau (1a) sich erstreckenden Flüssigkeitsaustrittsleitung (20) sowie mit einer Luftzufuhrleitung (3,13) zur gesteuerten Zufuhr von Luft in das Innere des Flüssigkeitsbehälters (2) in Abhängigkeit von einem minimalen und einem maximalen Speisebecken-Flüssigkeitsniveau (1a,1b), versehen ist, wobei diese Luftzufuhrleitung (3,13) sich in das Flüssigkeits-Speisebecken (9) hinein erstreckt, dadurch gekennzeichnet, daß die an der Oberseite des Flüssigkeitsbehälters angeordnete Luftzufuhrleitung auf den beiden vorgenannten Flüssigkeitsniveaus (1a,1b) mit mindestens je einer Luftzufuhröffnung (12,11) versehen ist, wobei die obere Luftzufuhröffnung (11) über eine über das maximale Flüssigkeitsniveau (1b) hinaus sich erstreckende Steuerleitung (4) mit dem Innern des Flüssigkeits-Auffangbecken (8) verbunden ist, derart, dass bei Vorhandensein eines bestimmten Minimalflüssigkeitsniveaus (10) im Auffangbecken (8) die Lufteintrittsöffnung am unteren Ende der Steuerleitung (4) von der im Auffangbecken (8) sich befindenden Flüssigkeit überdeckt und damit deren Verbindung mit der Aussenatmosphäre vorübergehend so lange unterbrochen wird, bis das Flüssigkeitsniveau im Auffangbecken (8) wieder unterhalb diese Lufteintrittsöffnung der Steuerleitung (4) absinkt, und dass das saugfähige Kapillarelement (7) sich bis auf ein zwischen dem minimalen und dem maximalen Speisebecken-Flüssigkeitsniveau (1a,1b) liegendes Niveau in das Flüssigkeits-Speisebecken (9) hinein erstreckt.

2. Luftbefeuchter nach Anspruch 1, dadurch gekennzeichnet, dass das saugfähige Kapillarelement (7) auf seinem über den oberen Beckenrand des Speisebeckens (9) hinweg sich erstreckenden Abschnitt zur Bildung einer Flüssigkeits-Pumpnut (14) mindestens eine vom Innern des Speisebeckens (9) über den oberen Beckenrand bis auf die Aussenseite dieses Bekkens (9) erstreckende Nut (14) überdeckt, wobei die vertikale Länge (L1) des im Beckeninnern sich erstreckenden, vom Kapillarelement (7) überdeckten Nutabschnittes geringer ist als die vertikale Länge (L3) des auf der Beckenaussenseite sich erstreckenden, vom Kapillarelement (7) überdeckten Nutabschnittes.

## Claims

1. An air humidifier with an upper liquid-feed tank (9), an absorbent capillary element (7) projecting into the latter, a liquid-collecting tank (8) arranged at the lower end of the said capillary element (7), and a self-contained liquid container (2) for delivering liquid in a controlled manner into the liquid-feed tank (9), which container (2) is provided on its underside with a liquid-outlet line (20) extending into the said liquid-feed tank (9) to below a specified minimum level (la) of liquid as well as with an air-supply line (3, 13) for the controlled supply of air into the interior of the liquid container (2) as a function of a minimum and a maximum level (1a, 1b) of liquid in the feed tank, wherein the said air-supply line (3, 13) extends into the liquid-feed tank (9), **characterized in that** the air-supply line arranged on the top of the liquid container is provided with at least one respective air-supply opening (12, 11) at each of the two above-mentioned levels (1a, 1b) of liquid, wherein the upper air-supply opening (11) is connected to the interior of the liquid-collecting tank (8) by way of a control line (4) extending beyond the maximum level (1b) of liquid, in such a way that when a specified minimum level (10) of liquid is present in the collecting tank (8) the air-inlet opening at the lower end of the control line (4) is covered by the liquid present in the collecting tank (8) and as a result its connexion to the outside atmosphere is momentarily interrupted until the level of liquid in the collecting tank (8) drops below the said air-inlet opening of the control line (4) again, and the absorbent capillary element (7) extends into the liquid-feed tank (9) to a level lying between the minimum and the maximum levels (1a, 1b) of liquid in the feed tank.

2. An air humidifier according to Claim 1, **characterized in that,** on its portion extending over the upper edge of the feed tank (9) so as to form a liquid-pumping groove (14) the absorbent capillary element (7) covers at least one groove (14) extending from the interior of the feed tank (9) over the upper edge of the tank as far as the outside of the said tank (9), wherein the vertical length (L1) of the portion of the groove extending in the interior of the tank and covered by the capillary element (7) is smaller than the vertical length (L3) of the portion of the groove extending on the outside of the tank and covered by the capillary element (7).

## Revendications

1. Humidificateur d'air comprenant un réservoir de liquide supérieur (9), un élément capillaire absorbant (7) pénétrant dans ce dernier, un collecteur de liquide disposé à l'extrémité inférieure du dernier cité et un récipient de liquide (2) fermé en soi, pour la libération commandée de liquide dans le réservoir de liquide (9) dans sa partie inférieure comprenant, un conduit de sortie de liquide (20) s'étendant dans le dernier cité, jusqu'à un endroit situé en dessous d'un niveau minimal de liquide déterminé (la), ainsi qu'un conduit d'amenée d'air (3, 13) pour l'alimentation commandée d'air à l'intérieur du récipient de liquide (2) en fonction d'un niveau de liquide minimal (la) et d'un niveau de liquide maximal (1b) dans le réservoir, dans lequel ce conduit d'amenée d'air (3, 13) s'étend à l'intérieur du réservoir de liquide (9), caractérisé en ce que le conduit d'amenée d'air disposé dans la partie supérieure du récipient de liquide est muni, aux deux niveaux de liquide (la, 1b) susmentionnés, d'au moins respectivement une ouverture d'alimentation d'air (12, 11), l'ouverture d'alimentation d'air supérieure (11) étant reliée, via un conduit de commande (4) s'étendant au-delà du niveau de liquide maximal (1b), avec l'intérieur du collecteur de liquide (8) de telle sorte qu'en présence d'un niveau de liquide minimal déterminé (10) dans le collecteur (8), l'ouverture d'entrée d'air à l'extrémité inférieure du conduit de commande (4) est recouverte par le liquide se trouvant dans le collecteur (8) en interrompant ainsi sa liaison avec l'atmosphère externe de manière temporaire jusqu'à ce que le niveau de liquide dans le collecteur (8) redescende pour aboutir en dessous de cette ouverture d'entrée d'air du conduit de commande (4), et en ce que l'élément capillaire absorbant (7) s'étend dans le réservoir de liquide (9) jusqu'à un niveau situé entre le niveau de liquide minimal (la) dans le réservoir et le niveau de liquide maximal (1b) dans le réservoir.

2. Humidificateur d'air selon la revendication (1), caractérisé en ce que l'élément capillaire absorbant (7) recouvre, sur sa section s'étendant au-delà du bord supérieur du réservoir (9) pour former une rainure de pompage de liquide (14), au moins une rainure (14) s'étendant depuis l'intérieur du réservoir (9) au-delà du bord supérieur du réservoir jusqu'à l'extérieur de ce réservoir (9), dans lequel la longueur verticale (L1) de la section de rainure recouverte par l'élément capillaire (7) et s'étendant à l'intérieur du réservoir, est inférieure à la longueur verticale (L3) de la section de rainure recouverte par l'élément capillaire (7) et s'étendant à l'extérieur du réservoir.
